# EUROPÄISCHE PATENTSCHRIFT

(11) **EP 2 663 025 B1**
(45) Veröffentlichungstag und Bekanntmachung des Hinweises auf die Patenterteilung: **26.10.2016**
(21) Anmeldenummer: 12401089.3
(22) Anmeldetag: 10.05.2012
(51) Int. Cl.: H04L 12/28, H04L 29/08, H04L 29/06

(54) **Verfahren zum Betrieb eines Haushaltsgerätenetzwerks und Haushaltsgerät zur Verwendung in einem solchen Netzwerk**
Method for operating a domestic appliance network and domestic appliance for use in such a network
Procédé de fonctionnement d'un réseau d'appareils ménagers et appareil ménager destiné à l'utilisation dans un tel réseau

(43) Veröffentlichungstag der Anmeldung: 13.11.2013
(73) Patentinhaber: Miele & Cie. KG, 33332 Gütersloh (DE)
(72) Erfinder: Benner, Florian, 59425 Unna (DE); Maas, Günther, 33332 Gütersloh (DE); Niehaus, Detlef, 59067 Hamm (DE)

(56) Entgegenhaltungen:
- WO-A1-2005/004400
- WO-A1-2006/135758
- US-A1- 2008 159 307

## Beschreibung

Die vorliegende Erfindung betrifft zuvorderst ein Verfahren zum Betrieb einer Mehrzahl von in einem Haushaltsgerätenetzwerk zusammengefassten und untereinander kommunikativ verbundenen Haushaltsgeräten. Die Erfindung betrifft im Weiteren ein zur Verwendung in einem solchen Haushaltsgerätenetzwerk speziell ausgestaltetes Haushaltsgerät und sodann ein Haushaltsgerätenetzwerk mit einem solchen speziellen Haushaltsgerät. Schließlich betrifft die Erfindung auch eine spezielle Verwendung des speziellen Haushaltsgeräts in einem Haushaltsgerätenetzwerk.

Eine Vernetzung von Haushaltsgeräten ist bereits bekannt. Die Anmelderin der vorliegenden Erfindung bietet Lösungen, mit denen Haushaltsgeräte, also zum Beispiel eine Waschmaschine, ein Geschirrspüler, ein Backofen und dergleichen, innerhalb eines Haushalts kommunikativ verbindbar sind. Die Verbindung erfolgt dabei zum Beispiel auf Basis einer Datenübertragung über vorhandene Kommunikations- oder Stromnetze, indem Signale über eine oder mehrere Trägerfrequenzen zusätzlich auf die bereits für Kommunikations- oder Stromversorgungszwecke vorhandene Leitung moduliert werden. Ein insofern geläufiges Verfahren ist unter der Bezeichnung Powerline-Kommunikation bekannt. Alternativ kommt auch grundsätzlich jede andere Verbindungsmöglichkeit in Betracht. Lediglich beispielhaft werden insofern eine serielle Datenübertragung (RS 232) oder die Verwendung eines innerhalb des Haushalts bereits bestehenden lokalen Netzwerks (LAN) genannt.

Die Verwendbarkeit eines Haushaltsgeräts in einem solchen Haushaltsgerätenetzwerk setzt naturgemäß die Anschließbarkeit des jeweiligen Haushaltsgeräts an das Haushaltsgerätenetzwerk voraus. Für das jeweilige Haushaltsgerät ist damit zumindest eine Hardwareschnittstelle zur jeweiligen Übertragungsphysik und eine Softwareschnittstelle zumindest zum Empfangen, insbesondere zum Empfangen und Senden, von Daten über das Haushaltsgerätenetzwerk erforderlich. Bisher ist es aus Kostengründen noch vielfach üblich, nicht jedes Haushaltsgerät in dieser Weise auszustatten. Die Haushaltsgeräte der Anmelderin weisen dementsprechend in speziellen Ausführungsformen eine Anschlussmöglichkeit für jeweils ein Kommunikationsmodul auf, das sowohl die oben genannte Hardwareschnittstelle wie auch die ebenfalls oben genannte Softwareschnittstelle implementiert. Dem Anwender bleibt damit die Möglichkeit erhalten, für jedes einzelne Haushaltsgerät individuell entscheiden zu können, ob eine Anschließbarkeit an ein Haushaltsgerätenetzwerk gewünscht ist oder nicht.

Unabhängig von einer solchen Erweiterbarkeit eines Haushaltsgeräts um ein Kommunikationsmodul oder dergleichen bleibt die Ertüchtigung eines Haushaltsgeräts für eine Anschließbarkeit an ein Haushaltsgerätenetzwerk ein nicht unerheblicher Kostenfaktor. Die Anschließbarkeit eines Haushaltsgeräts an ein Haushaltsgerätenetzwerk bedeutet jedoch für den Benutzer einen im Einzelfall durchaus beträchtlichen Komfortgewinn. Die Haushaltsgeräte lassen sich damit zentral aktivieren und deaktivieren, so dass über ein vom Haushaltsgerätenetzwerk umfasstes sogenanntes Gateway mit einem Anschluss an das sogenannte Internet sogar Fernabfragen in Bezug auf den Aktivierungsstatus einzelner oder mehrerer Haushaltsgeräte möglich sind. Speziell für Berufstätige ist dabei gegebenenfalls die Möglichkeit interessant, kurz vor Verlassen der Arbeitsstelle zuhause den Backofen aktivieren zu können, so dass für zuvor im Backofen platziertes Gargut beim Eintreffen zuhause ein teilweise oder weitgehender Abschluss des Garprozesses erwartet werden kann und sich somit für den Benutzer eine erhebliche Zeitersparnis ergibt. Umgekehrt lässt sich jederzeit ein eventuell vergessenes Gerät deaktivieren, so dass ein Benutzer zum Beispiel beruhigt einen Urlaub fortsetzen oder eine Dienstreise antreten kann, ohne vor Antritt einer solchen Dienstreise zuhause die Haushaltsgeräte prüfen zu müssen.

Eine solche im Wesentlichen auf einen Komfortgewinn des Benutzers ausgerichtete Zusatzfunktionalität kommt dennoch nicht in jedem Falle für alle Arten von Haushaltsgeräten in Betracht. In eine solche Kategorie fallen zum Beispiel Geräte wie Kochfelder, Dunstabzugshauben und dergleichen. Für solche Geräte stehen Funktionalitäten wie eine externe Aktivierbarkeit oder Deaktivierbarkeit deutlich im Hintergrund und die Einbindung solcher Geräte in ein Haushaltsgerätenetzwerk ist vor allem im Hinblick auf externe Zugriffsmöglichkeiten eines Kundendiensttechnikers sinnvoll, um zum Beispiel eine Fernwartung, aber auch eine Veränderung von Betriebsparametern oder dergleichen zu ermöglichen.

Im Folgenden werden zur Unterscheidung und für eine sprachlich einfache Darstellung einzelne Haushaltsgeräte als Haushaltsgeräte einer ersten Gruppe oder als Haushaltsgeräte einer zweiten Gruppe bezeichnet. Zur ersten Gruppe gehören dabei insbesondere Haushaltsgeräte mit einem großen Funktionsumfang, wie zum Beispiel Waschmaschinen, Geschirrspüler, Backöfen und dergleichen. Zur zweiten Gruppe gehören Haushaltsgeräte mit einem eher reduzierten Funktionsumfang, also insbesondere Dunstabzugshauben und Kochfelder.

Aus der US 2008/159307 A1 ist es allgemein bekannt, Geräte eines zweiten Netzwerkes mit Hilfe eines Gateways kommunikativ mit einem ersten Netzwerk zu verbinden. Das Gateway ist dabei als separates Gerät ausgebildet, welches die Umsetzung des Kommunikationsprotokolls sicherstellen muss. Die Geräte des zweiten Netzwerkes sind dabei quasi im ersten Netzwerk als Teilnehmer wahrnehmbar und entsprechend zu handhaben.

Aus der WO 2006/135758 A1 ist allgemein ein Haushaltgerätenetzwerk bekannt, bei dem Haushaltgeräte mit einem externen Gerät in Kommunikationsverbindung treten zum Austausch von Informationen oder Steuerungsparametern.

Die Anmelderin der vorliegenden Erfindung bietet unter der Bezeichnung Con@ctivity eine Möglichkeit für eine Kommunikation zwischen einer Dunstabzugshaube und einem Kochfeld an. Informationen des Kochfelds werden dabei erfasst und an die Steuerung der Dunstabzugshaube übermittelt. Die Steuerung der Dunstabzugshaube kann damit automatisch die jeweils angemessene Betriebsstufe zur Ansteuerung des Gebläsemotors wählen. Zudem ergibt sich die Möglichkeit des automatischen Ein- und Ausschaltens der Dunstabzugshaube und einer in die Dunstabzugshaube integrierten Kochfeldbeleuchtung. Dunstabzugshaube und Kochfeld sind dafür kommunikativ verbunden, ohne dass dies ein Haushaltsgerätenetzwerk darstellt, denn die über die kommunikative Verbindung übertragenen Daten beschränken sich auf eine Übertragung von Steuerbefehlen für die Dunstabzugshaubensteuerung. Die zur Nutzung der kommunikativen Verbindung zwischen Kochfeld und Dunstabzugshaube notwendigen Kommunikationsfunktionen können damit auf ein Minimum beschränkt sein. Zudem ist ein Zugriff auf solche Geräte der zweiten Gruppe nur innerhalb eines lokal beschränkten Netzwerks möglich, das eventuell nur zwei Kommunikationsteilnehmer, nämlich das Kochfeld und die Dunstabzugshaube umfasst. Gegebenenfalls sind mittelbare Zugriffe auf Haushaltsgeräte der zweiten Gruppe möglich, indem ein Haushaltsgerät der ersten Gruppe, das mit einzelnen oder mehreren Haushaltsgeräten der zweiten Gruppe verbunden ist, Statusinformationen einzelner Haushaltsgeräte der zweiten Gruppe sammelt. Das jeweilige Haushaltsgerät der ersten Gruppe fragt diese dafür zuvor bei dem jeweiligen Haushaltsgerät der zweiten Gruppe ab, so dass solche Statusinformationen dann bei dem sammelnden Gerät abgerufen werden können. Auf diesem Wege werden Statusinformationen einzelner oder mehrerer Haushaltsgeräte der zweiten Gruppe grundsätzlich auch für andere, nicht direkt mit den Haushaltsgeräten der zweiten Gruppe verbundene Haushaltsgeräte verfügbar. In Fortführung dieses Ansatzes können über ein Gateway oder dergleichen solche Statusinformationen auch extern verfügbar gemacht werden, indem ein Zugriff auf das mit dem oder jedem Haushaltsgerät der zweiten Gruppe verbundene Haushaltsgerät erfolgt und dort die für einzelne oder mehrere Haushaltsgeräte der zweiten Gruppe vorgehaltenen Statusinformationen abgerufen werden. Ein direkter Zugriff auf ein Haushaltsgerät der zweiten Gruppe ist auf diese Art allerdings nicht möglich.

Eine Aufgabe der vorliegenden Erfindung besteht - kurz gefasst - entsprechend darin, auch Haushaltsgeräte der zweiten Gruppe auf einfache und kostengünstige Art und Weise in ein Haushaltsgerätenetzwerk zu integrieren und einen direkten Zugriff auf solche Haushaltsgeräte auch für solche Teilnehmer des Haushaltsgerätenetzwerks zu ermöglichen, die mit dem jeweiligen Haushaltsgerät der zweiten Gruppe nicht direkt verbunden sind, und in Fortführung dieses Ansatzes direkte Zugriffe auf Haushaltsgeräte der zweiten Gruppe auch für Geräte außerhalb des Haushaltsgerätenetzwerks zu ermöglichen.

Erfindungsgemäß wird diese Aufgabe mit einem Verfahren zum Betrieb einer Mehrzahl von in einem Haushaltsgerätenetzwerk zusammengefassten und untereinander kommunikativ verbundenen Haushaltsgeräten durch die Merkmale des Anspruchs 1 gelöst. Innerhalb der kommunikativ verbundenen Haushaltsgeräte sind eine erste Gruppe der Haushaltsgeräte zur Verwendung eines ersten Kommunikationsprotokolls und eine zweite Gruppe der Haushaltsgeräte zur Verwendung eines zweiten Kommunikationsprotokolls eingerichtet. Mindestens ein als Koordinator fungierendes Haushaltsgerät der ersten Gruppe ist auch zur Verwendung des zweiten Kommunikationsprotokolls eingerichtet. Der oder jeder Koordinator fungiert als Empfänger eines für ein Haushaltsgerät der zweiten Gruppe, das im Folgenden als Adressat bezeichnet wird, eingehendes Telegramm, insbesondere als Empfänger eines von außerhalb des Haushaltsgerätenetzwerks eingehenden Telegramms für den jeweiligen Adressaten. Der Koordinator leitet nach Empfang eines solchen Telegramms das Telegramm, nämlich zumindest dessen Nutzdaten oder einen vorgegebenen oder vorgebbaren Teil von dessen Nutzdaten, entsprechend dem zweiten Kommunikationsprotokoll an den jeweiligen Adressaten der zweiten Gruppe weiter.

Der Vorteil des Betriebs einer Mehrzahl von in einem Haushaltsgerätenetzwerk zusammengefassten und untereinander kommunikativ verbundenen Haushaltsgeräte, das mitunter auch kurz nur als Verfahren zum Betrieb eines Haushaltsgerätenetzwerks bezeichnet wird, besteht darin, dass bisher nicht von jedem Teilnehmer eines solchen Haushaltsgerätenetzwerks erreichbare Haushaltsgeräte der zweiten Gruppe grundsätzlich von jedem Teilnehmer des Haushaltsgerätenetzwerks, also insbesondere von jedem Haushaltsgerät der ersten Gruppe, sowie auch von außerhalb des Haushaltsgerätenetzwerks erreichbar sind. Damit kann in einem Haushaltsgerätenetzwerk jedes davon umfasste Haushaltsgerät der zweiten Gruppe in erweiterter Form beeinflusst werden, ohne dass eine solche Einflussmöglichkeit auf dasjenige Haushaltsgerät beschränkt ist, das mit dem jeweiligen Haushaltsgerät der zweiten Gruppe direkt kommunikativ verbunden ist. Speziell indem die Möglichkeit der Beeinflussbarkeit eines Haushaltsgeräts der zweiten Gruppe jetzt auch für Geräte außerhalb des Haushaltsgerätenetzwerks besteht, kann mit solchen externen Geräten direkt auf das jeweilige Haushaltsgerät der zweiten Gruppe zugegriffen werden. Auf diese Weise wird zum Beispiel für Servicetechniker mit einem entsprechenden Servicegerät, das zum Beispiel über einen Internetanschluss verfügt und insoweit einen Zugriff auf das jeweilige Haushaltsgerätenetzwerk über ein von dem Haushaltsgerätenetzwerk umfasstes Gateway ermöglicht, eine Fernwartung jedes Geräts der ersten Gruppe innerhalb des entfernten Haushaltsgerätenetzwerks möglich. Zusätzlich oder alternativ zu einer Fernwartung kommt auch in Betracht, dass der Servicetechniker über das Servicegerät Statusinformationen bei dem jeweiligen Haushaltsgerät der zweiten Gruppe direkt und unmittelbar abfragen kann, so dass solche Daten zum Beispiel unverzüglich und ohne den bisher unvermeidlichen Zeitverzug, nämlich wenn das mit dem Haushaltsgerät der zweiten Gruppe direkt verbundene Haushaltsgerät solche Daten regelmäßig abfragt und sammelt und diese Daten dann bei dem sammelnden Haushaltsgerät abgerufen werden, zur Verfügung stehen. Insgesamt verhält sich ein Haushaltsgerät der zweiten Gruppe in einem solchen Haushaltsgerätenetzwerk dann für einen Betrachter innerhalb des Haushaltsgerätenetzwerks oder einen Betrachter außerhalb des Haushaltsgerätenetzwerks wie ein Haushaltsgerät der ersten Gruppe mit dessen deutlich erhöhter Kommunikationsfunktionalität.

Der in dem Haushaltsgerätenetzwerk als Koordinator fungierende Kommunikationsteilnehmer ist ein schaltbarer Kommunikationsteilnehmer in dem Sinne, dass er entweder Telegramme nach dem ersten Kommunikationsprotokoll empfängt und verarbeitet oder generiert und sendet oder spezielle Telegramme nach dem ersten Kommunikationsprotokoll empfängt und zumindest deren Nutzdaten nach dem zweiten Kommunikationsprotokoll weiterleitet. Die Umschaltung wird dabei durch das jeweilige Telegramm selbst bewirkt, indem der Koordinator dessen Inhalt auswertet und danach die weitere Bearbeitung vornimmt. Alternativ kann die Umschaltung auch durch ein zum Bewirken der Umschaltung vorgesehenes und zeitlich vorher empfangenes Telegramm bewirkt werden, das den Koordinator in einen Zustand versetzt, bei dem bis zu einem erneuten Umschalttelegramm die Nutzdaten aller eingehenden Telegramm nach dem zweiten Kommunikationsprotokoll weitergeleitet werden. Hinsichtlich der Weiterleitung von Nutzdaten gemäß dem zweiten Kommunikationsprotokoll kann dies über eine im Gegensatz zu einer eingangsseitigen Kommunikationshardschnittstelle und Kommunikationssoftwareschnittstelle andere, ausgangsseitige Kommunikationshard- und -softwareschnittstelle erfolgen. Genauso ist denkbar, dass ein- und ausgangsseitig jeweils die selbe Kommunikationshard-und/oder -softwareschnittstelle Verwendung finden. Im Vorstehenden beziehen sich die Begriffe senden und empfangen sowie ein- und ausgangsseitig auf das beschriebene Szenario. Beim Empfang eines Telegramms nach dem zweiten Kommunikationsprotokoll und einer Weiterleitung von dessen Nutzdaten nach dem ersten Kommunikationsprotokoll durch den Koordinator sind die Bezeichnungen entsprechend vertauscht anzuwenden.

Vorteilhafte Ausgestaltungen und Weiterbildungen der Erfindung ergeben sich aus den nachfolgenden Unteransprüchen. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei dem erfindungsgemäßen Verfahren ist vorgesehen, dass das für den Adressaten bestimmte Telegramm einerseits ein gemäß dem ersten Kommunikationsprotokoll interpretierbares erstes, äußeres Datagramm und andererseits ein gemäß dem zweiten Kommunikationsprotokoll interpretierbares zweites, inneres Datagramm umfasst. Beim Erhalt eines für einen Adressaten innerhalb der zweiten Gruppe der Haushaltsgeräte bestimmten Telegramms extrahiert der Koordinator das zweite Datagramm aus dem empfangenen Telegramm und leitet das zweite Datagramm entsprechend dem zweiten Kommunikationsprotokoll an den jeweiligen Adressaten der zweiten Gruppe weiter. Wenn hier und im Folgenden das erste Datagramm als äußeres Datagramm und korrespondierend das zweite Datagramm als inneres Datagramm bezeichnet wird, meint dies durchaus auch, aber nicht ausschließlich eine Kapselung des inneren Datagramms im äußeren Datagramm. Grundsätzlich versucht die Benennung zu illustrieren, dass das zweite, innere Datagramm bei einer Bearbeitung des Telegramms nach dem ersten Kommunikationsprotokoll nicht in Erscheinung tritt, insbesondere nicht als Datagramm eines anderen Kommunikationsprotokolls in Erscheinung tritt. Tatsächlich ist das zweite Datagramm nichts anderes als ein Teil der Nutzdaten des gemäß dem ersten Kommunikationsprotokoll übermittelten Telegramms und die Extraktion des zweiten Datagramms aus dem Telegramm durch den Koordinator bedeutet dementsprechend eine Verarbeitung dieser Nutzdaten, die darin resultiert, dass die von dem ursprünglichen Telegramm umfassten Nutzdaten für den Adressaten, also das zweite Datagramm, gemäß dem zweiten Kommunikationsprotokoll an den jeweiligen Adressaten weitergeleitet werden.

Bei dem erfindungsgemäßen Verfahren ist vorgesehen, dass das von außerhalb des Haushaltsgerätenetzwerks eingehende Telegramm, im ersten und im zweiten Datagramm, den jeweiligen Adressat der zweiten Gruppe bezeichnet. Im Weiteren umfasst dann der Koordinator eine Datenbasis mit Adressinformationen der Haushaltsgeräte der zweiten Gruppe. Der Koordinator ist damit in der Lage, anhand der Datenbasis auch Telegramme zu empfangen, die im ersten Datagramm nicht für ihn, sondern als für einen jeweiligen Adressat der zweiten Gruppe bestimmt bezeichnet sind. Bei dem Verfahren wird in dem an das Haushaltsgerätenetzwerk gesandten Telegramm oder dem im Haushaltsgerätenetzwerk versandten Telegramm der eigentliche Empfänger, also der jeweilige Adressat der zweiten Gruppe, direkt angegeben. Der jeweilige Adressat der zweiten Gruppe ist dennoch nicht direkt, sondern nur über den Koordinator erreichbar. Der Koordinator muss dementsprechend das Telegramm zunächst selbst empfangen. Dafür verwaltet er eine Datenbasis mit Adressinformationen der Haushaltsgeräte. Anhand dieser Adressinformation und der Auszeichnung des Adressaten im Telegramm kann der Koordinator erkennen, welche nicht unmittelbar für ihn ausgezeichneten Telegramme zusätzlich empfangen werden sollen. Nach der Entgegennahme des von außerhalb des Haushaltsgerätenetzwerks eingegangenen Telegramms kann der Koordinator die Nutzdaten des Telegramms unmittelbar entsprechend dem zweiten Kommunikationsprotokoll an den jeweiligen Adressaten der zweiten Gruppe weiterleiten.

Bei einer besonderen Ausführungsform des Verfahrens, bei dem der Koordinator auch Telegramme, die nicht unmittelbar als für ihn bestimmt ausgezeichnet sind, anhand der in einer Datenbasis vorgehaltenen Adressinformationen empfängt, ist vorgesehen, dass der Koordinator die Datenbasis mit Adressinformationen der Haushaltsgeräte der zweiten Gruppe automatisch und selbsttätig erstellt. Dafür kann der Koordinator zum Beispiel an alle Haushaltsgeräte der zweiten Gruppe ein spezielles und als Identifikationsanfrage fungierendes Telegramm richten, woraufhin sich jedes Haushaltsgerät der zweiten Gruppe gegenüber dem Koordinator identifiziert. Diese Identifikation erfolgt im Wege einer Übermittlung zumindest einer Adressinformation zu dem jeweiligen Haushaltsgerät der zweiten Gruppe an den Koordinator. Üblicherweise umfasst die Identifikation auch Informationen zur Art des jeweiligen Haushaltsgeräts der zweiten Gruppe, so dass beim Koordinator zum Beispiel auch die Anzahl und die jeweilige Art der Haushaltsgeräte der zweiten Gruppe abfragbar sind. Auf diese Art und Weise lässt sich zum Beispiel feststellen, ob zu den Haushaltsgeräten der zweiten Gruppe ein zum Typ der Dunstabzugshauben gehörendes Haushaltsgerät gehört und unter welcher Adresse dieses Haushaltsgerät ansprechbar ist. Mit diesen beim Koordinator abrufbaren Informationen kann dann an die Dunstabzugshaube als Haushaltsgerät der zweiten Gruppe direkt ein Telegramm gesendet werden indem unmittelbar die Dunstabzugshaube als Empfänger (Adressat) ausgezeichnet ist.

Bei dem erfindungsgemäßen Verfahren, bei dem das von außerhalb des Haushaltsgerätenetzwerks eingehende Telegramm den jeweiligen Adressaten direkt bezeichnet, ist vorgesehen, dass der Koordinator ein solches, für einen Adressaten der zweiten Gruppe empfangenes Telegramm anhand einer vom zweiten Datagramm umfassten Adressinformation an den Adressaten der zweiten Gruppe weiterleitet. Dies ist vorteilhaft, weil der Koordinator aus dem empfangenen Telegramm lediglich das zweite Datagramm extrahieren muss und dieses zweite Datagramm dann lediglich die Weiterleitung gemäß dem zweiten Kommunikationsprotokoll erfordert.

Das hier und im Folgenden beschriebene Verfahren zum Betrieb eines Haushaltsgerätenetzwerks eignet sich speziell für Situationen, bei denen das zweite Kommunikationsprotokoll eine im Vergleich zum ersten Kommunikationsprotokoll geringere Anzahl von Protokollschichten implementiert. Das erste Kommunikationsprotokoll ist dann gegenüber dem zweiten Kommunikationsprotokoll leistungsfähiger. Der damit einhergehende größere Funktionsumfang erfordert jedoch auch zusätzlichen Auf wand, speziell im Hinblick auf die Implementierung einer passenden Softwareschnittstelle auf Seiten des jeweiligen Haushaltsgeräts. Wenn das zweite Kommunikationsprotokoll im Vergleich zum ersten Kommunikationsprotokoll eine geringere Anzahl von Protokollschichten implementiert, bedeutet dies einerseits zwar einen reduzierten Funktionsumfang, andererseits aber auch einen geringeren Aufwand bei der Implementierung der betreffenden Softwareschnittstelle für die jeweiligen Haushaltsgeräte der zweiten Gruppe. Eine Ergänzung eines solchen Haushaltsgeräts um eine entsprechende Hard- und Softwareschnittstelle verteuert das betreffende Haushaltsgerät damit nur unwesentlich.

Bei einer Ausführungsform des Verfahrens wie hier und im Folgenden beschrieben sammelt ein im Haushaltsgerätenetzwerk als zentraler Kommunikationsteilnehmer fungierendes Haushaltsgerät der ersten Gruppe Informationen zu allen von dem Haushaltsgerätenetzwerk umfassten Haushaltsgeräten der ersten und/oder der zweiten Gruppe und stellt anderen Haushaltsgeräten des Haushaltsgerätenetzwerks und/oder Geräten außerhalb des Haushaltsgerätenetzwerks diese Informationen zur Verfügung. Das als zentraler Kommunikationsteilnehmer fungierende Haushaltsgerät ist damit über den Ausbau des Haushaltsgerätenetzwerks und die Anzahl und die Art der erreichbaren Haushaltsgeräte informiert, so dass andere Haushaltsgeräte des selben Haushaltsgerätenetzwerks zum Beispiel Informationen erhalten können, wie beispielsweise eine Dunstabzugshaube erreichbar ist. Des Weiteren können auf dieser Basis auch Geräte außerhalb des Haushaltsgerätenetzwerks, wie zum Beispiel ein Servicegerät oder dergleichen, ebenfalls Informationen darüber erhalten, ob von dem Haushaltsgerätenetzwerk zum Beispiel eine Dunstabzugshaube umfasst ist und wie diese erreichbar ist. Insgesamt betrifft die Erfindung damit auch ein Haushaltsgerät mit Mitteln zur kommunikativen Verbindbarkeit mit anderen Haushaltsgeräten, also zumindest einer entsprechenden Hardwareschnittstelle sowie zumindest einer entsprechenden Softwareschnittstelle, sowie Mitteln zum Ausführen eines Verfahrens zum Betrieb eines Haushaltsgerätenetzwerks wie hier und im Folgenden beschrieben. Ein solches Haushaltsgerät mit Mitteln zum Ausführen des Verfahrens und eventuell einzelner Ausgestaltungen ist damit in der Lage, in dem Haushaltsgerätenetzwerk die Funktion eines Koordinators zu übernehmen.

Des Weiteren betrifft die Erfindung auch ein Haushaltsgerätenetzwerk mit zumindest einem derartigen, als Koordinator fungierenden Haushaltsgerät und im Weiteren ein solches Haushaltsgerätenetzwerk mit einer Mehrzahl von untereinander kommunikativ verbundenen Haushaltsgeräten, wobei innerhalb der kommunikativ verbundenen Haushaltsgeräte eine erste Gruppe der Haushaltsgeräte zur Verwendung eines ersten Kommunikationsprotokolls und eine zweite Gruppe der Haushaltsgeräte zur Verwendung eines zweiten Kommunikationsprotokolls eingerichtet sind und wobei die kommunikative Verbindung der Haushaltsgeräte der ersten Gruppe auf leitungsgebundenem oder leitungslosem Weg und die kommunikative Verbindung der Haushaltsgeräte der zweiten Gruppe auf leitungslosem Weg besteht.

Die einerseits leitungsgebundene und andererseits leitungslose kommunikative Verbindung der Haushaltsgeräte ist eine von mehreren möglichen Ausführungsformen, jedoch bietet eine kommunikative Verbindung der Haushaltsgeräte der ersten Gruppe auf leitungslosem Wege eine Möglichkeit für deren Vernetzung nach dem sogenannten Zigbee-Standard. Zigbee ist als einfache, aber dennoch robuste und vor allem kostengünstige Möglichkeit zur Vernetzung von räumlich beabstandeten, aber nicht allzu weit voneinander entfernten Geräten bekannt. Als zweites Kommunikationsprotokoll kommt ein Kommunikationsprotokoll in Betracht, das auf dem in der IEEE802.15.4 definierten Standard basiert.

Der bereits mehrfach verwendete Begriff Koordinator zur Bezeichnung desjenigen Haushaltsgeräts der ersten Gruppe, das auch zur Verwendung des zweiten Kommunikationsprotokolls eingerichtet ist, ist ein Begriff, wie er zur Bezeichnung eines speziellen Knotens eines Zigbee-Netzes üblich ist. Entsprechend einer besonderen Ausführungsform des hier und im Folgenden beschriebenen Verfahrens, bei dem Zigbee als erstes Kommunikationsprotokoll fungiert, bietet sich entsprechend die Verwendung des Begriffs Koordinator an. Dennoch darf der Begriff Koordinator für diejenigen Ausführungsformen des Verfahrens und der anderen Aspekte der hier vorgelegten Beschreibung, die nicht unmittelbar die Verwendung von Zigbee betreffen, nicht einschränkend ausgelegt werden und der Begriff ist insoweit nur als Benennung des betreffenden Haushaltsgeräts und als Mittel zu dessen sprachlich einfacher Referenzierung aufzufassen.

Schließlich betrifft die Erfindung damit insgesamt auch die Verwendung eines Haushaltsgeräts, nämlich eines Haushaltsgeräts mit Mitteln zur kommunikativen Verbindbarkeit mit anderen Haushaltsgeräten sowie Mitteln zum Ausführen des hier und im Folgenden beschriebenen Verfahrens in einem solchen Haushaltsgerätenetzwerk, als Schnittstelle zwischen Haushaltsgeräten einer ersten Gruppe und Haushaltsgeräten einer zweiten Gruppe, wobei jedes Haushaltsgerät der zweiten Gruppe in einem für ein solches Haushaltsgerät bestimmten Telegramm direkt adressierbar ist. Das als Koordinator fungierende Haushaltsgerät übernimmt damit eine Brückenfunktion zwischen dem Gültigkeitsbereich des ersten Kommunikationsprotokolls und dem Gültigkeitsbereich des zweiten Kommunikationsprotokolls innerhalb des Haushaltsgerätenetzwerks. Der Koordinator ist in der Lage, Telegramme gemäß dem ersten Kommunikationsprotokoll in Telegramme gemäß dem zweiten Kommunikationsprotokoll umzusetzen. Dabei bewirkt der Koordinator eine entsprechende Telegrammweiterleitung. Auch wenn diese Weiterleitung hier mitunter als Weiterleitung des Telegramms gemäß dem ersten Kommunikationsprotokoll bezeichnet wird, darf nicht übersehen werden, dass dies eine verkürzte Bezeichnung ist, denn tatsächlich handelt es sich um eine Weiterleitung der von dem Telegramm gemäß dem ersten Kommunikationsprotokoll umfassten Nutzdaten als Telegramm gemäß dem zweiten Kommunikationsprotokoll. Eine direkte Weiterleitung des Telegramms gemäß dem ersten Kommunikationsprotokoll ist nämlich nicht möglich und erfordert für eine Weiterleitung an den jeweiligen Adressaten der zweiten Gruppe der Haushaltsgeräte eine Umsetzung in ein Telegramm entsprechend dem zweiten Kommunikationsprotokoll.

Ein Ausführungsbeispiel der Erfindung ist in den Zeichnungen rein schematisch dargestellt und wird nachfolgend näher beschrieben. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung auch Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Figur 1: eine Haushaltsgerätenetzwerk mit einer Mehrzahl von in dem Haushaltsgerätenetzwerk kommunikativ verbundenen Haushaltsgeräten,
- Figur 2: eine vereinfachte Darstellung des Haushaltsgerätenetzwerks gemäß Figur 1,
- Figur 3: eine Darstellung einer kommunikativen Verbindung zwischen einem in dem Haushaltsgerätenetzwerk als Koordinator fungierenden Haushaltsgerät und einem in dem Haushaltsgerätenetzwerk als Adressat fungierenden Haushaltsgerät,
- Figur 4: eine Darstellung eines Anwendungsszenarios der hier beschriebenen Neuerungen und
- Figur 5: weitere Einzelheiten des als Koordinator fungierenden Haushaltsgeräts.

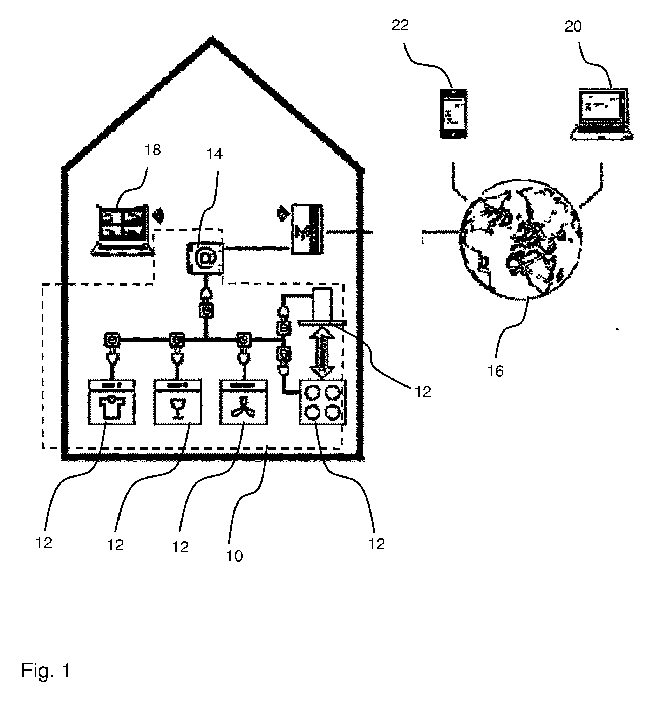

Figur 1 zeigt eine schematisch vereinfachte Darstellung eines Haushaltsgerätenetzwerks 10. Gezeigt ist insoweit eine Mehrzahl von Haushaltsgeräten 12, die in dem Haushaltsgerätenetzwerk 10 untereinander kommunikativ verbunden sind. Bei den dargestellten Haushaltsgeräten 12 handelt es sich einerseits um eine Waschmaschine, einen Geschirrspüler und einen Backofen sowie andererseits um ein Kochfeld und eine Dunstabzugshaube. Die Zusammenfassung der Haushaltsgeräte 12 in dem Haushaltsgerätenetzwerk 10 ermöglicht eine koordinierte Interaktion zwischen den von dem Haushaltsgerätenetzwerk 10 umfassten Haushaltsgeräten 12. Darüber hinaus ermöglicht das Haushaltsgerätenetzwerk 10 mit einem als Gateway fungierenden Netzwerkknoten 14 die Anbindung des Haushaltsgerätenetzwerks 10 an das symbolisch dargestellte, sogenannte Internet 16. Dies ermöglicht einen Zugriff von außerhalb des Haushaltsgerätenetzwerks 10 auf die von dem Haushaltsgerätenetzwerk 10 umfassten Haushaltsgeräte 12. Dies kann zum Beispiel lokal mit einem Personalcomputer 18 oder dergleichen oder entfernt ebenfalls mit einem Personalcomputer 20 oder einem sogenannten Smartphone 22 erfolgen.

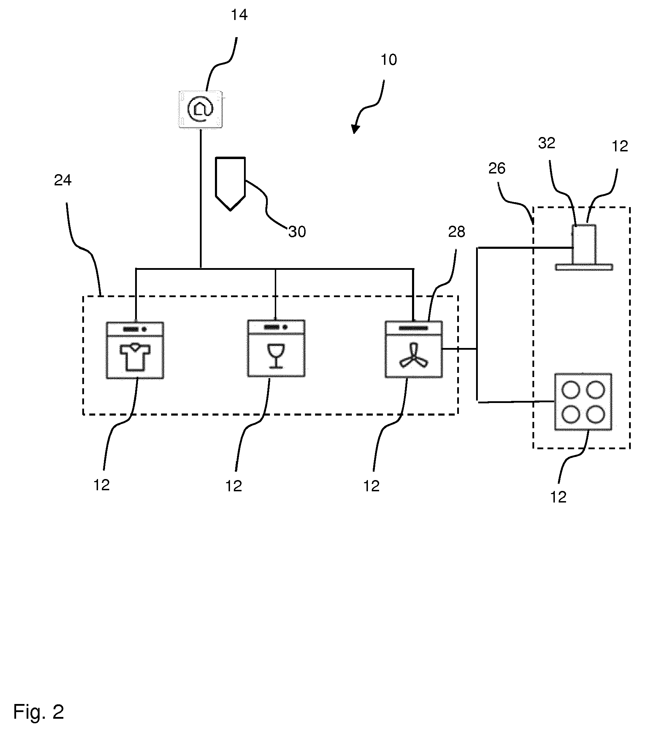

Figur 2 zeigt eine vereinfachte und auf das Haushaltsgerätenetzwerk 10 beschränkte Darstellung der Situation gemäß Figur 1. In dieser Darstellung wird deutlich, dass einzelne Haushaltsgeräte 12, nämlich beim dargestellten Beispiel die Waschmaschine, der Geschirrspüler und der Backofen, eine erste Gruppe 24 von Haushaltsgeräten 12 und die dann noch verbleibenden Haushaltsgeräte 12, nämlich beim dargestellten Beispiel das Kochfeld und die Dunstabzugshaube, eine zweite Gruppe 26 von Haushaltsgeräten 12 bilden. Die zur ersten Gruppe 24 gehörigen Haushaltsgeräte 12 sind zur Verwendung eines ersten Kommunikationsprotokolls und die zur zweiten Gruppe 26 gehörigen Haushaltsgeräte 12 sind zur Verwendung eines zweiten Kommunikationsprotokolls eingerichtet.

Ein als Koordinator 28 fungierendes Haushaltsgerät 12 der ersten Gruppe 24, bei der in Figur 2 dargestellten Situation der Backofen, ist auch zur Verwendung des zweiten Kommunikationsprotokolls eingerichtet, so dass die Haushaltsgeräte 12 der zweiten Gruppe 26 auch mit diesem Haushaltsgerät 12, nämlich dem Koordinator 28, kommunikativ verbunden sind. Ein im Haushaltsgerätenetzwerk 10 übermitteltes Telegramm 30, insbesondere ein von außerhalb des Haushaltsgerätenetzwerks 10 eingehendes Telegramm 30, kann damit, wenn es für ein Haushaltsgerät 12 der zweiten Gruppe 26 bestimmt ist, zunächst gemäß dem ersten Kommunikationsprotokoll zum Koordinator 28 gelangen und zumindest dessen für das jeweilige Haushaltsgerät 12 der zweiten Gruppe 26 bestimmte Nutzdaten können von dort an dieses weitergeleitet werden. Zur sprachlichen Vereinfachung wird im Folgenden dasjenige Haushaltsgerät 12 der zweiten Gruppe 26, für das ein im Haushaltsgerätenetzwerk 10 übermitteltes Telegramm 30 bestimmt ist, als Adressat 32 bezeichnet und beispielhaft wird von der Dunstabzugshaube als Adressat 32 ausgegangen.

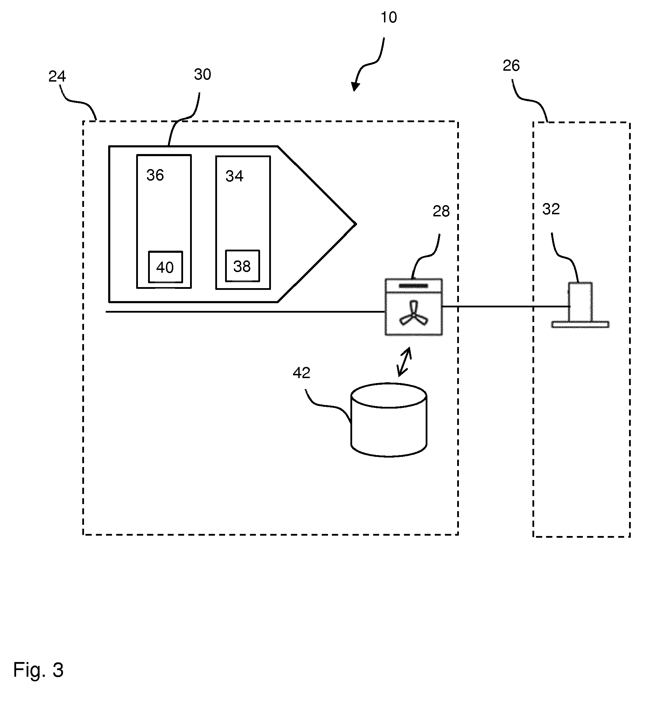

Figur 3 zeigt eine im Vergleich zu Figur 2 nochmals vereinfachte Darstellung. Von den Teilnehmern des Haushaltsgerätenetzwerks 10 sind nur noch diejenigen Haushaltsgeräte 12 gezeigt, die als Koordinator 28 und als Adressat 32 fungieren. Aufgrund der insoweit reduzierten Darstellung kann jetzt das Telegramm 30 mit weiteren Details gezeigt werden. Danach umfasst das Telegramm 30 einerseits ein gemäß dem ersten Kommunikationsprotokoll interpretierbares erstes, äußeres Datagramm 34 und andererseits ein gemäß dem zweiten Kommunikationsprotokoll interpretierbares zweites, inneres Datagramm 36. Das erste, äußere Datagramm 34 wird dabei als äußeres Datagramm 34 bezeichnet, weil es während der zunächst gemäß dem ersten Kommunikationsprotokoll innerhalb der ersten Gruppe 24 von Haushaltsgeräten 12 erfolgenden Übertragung des Telegramms 30 zutage tritt. Das zweite, innere Datagramm 36 wird entsprechend als inneres Datagramm 36 bezeichnet, weil es während dieser Übermittlung innerhalb der ersten Gruppe 24 von Haushaltsgeräten 12 gerade nicht zutage tritt und vielmehr als Teil der Nutzdaten des Telegramms 30 erscheint. Das zweite Datagramm 36 kann dabei - anders als dargestellt - tatsächlich vollständig von dem ersten Datagramm 34 umfasst sein, obwohl dies für die weitere Beschreibung unerheblich ist. Wenn das als Koordinator 28 fungierende Haushaltsgerät 12 ein Telegramm 30 erhält, das für einen Adressaten 32 außerhalb der ersten Gruppe 24 bestimmt ist, extrahiert der Koordinator 28 aus dem empfangenen Telegramm 30 das zweite Datagramm 36. Anschließend leitet der Koordinator 28 das zweite Datagramm 36 entsprechend dem zweiten Kommunikationsprotokoll an den jeweiligen Adressaten 32 der zweiten Gruppe 26 weiter.

Dabei kommt in Betracht, dass das Telegramm 30 den Adressaten 32 als Empfänger des Telegramms 30 ausweist.

Das im Haushaltsgerätenetzwerk 10 übermittelte Telegramm 30 bezeichnet im ersten und zweiten Datagramm 34, 36 den jeweiligen Adressaten 32 der zweiten Gruppe 26. Der Koordinator 28 muss zur korrekten Behandlung eines solchen Telegramms 30 auch in der Lage sein, Telegramme 30 zu empfangen, die entsprechend der davon umfassten Adressinformationen 38, 40 nicht als originär für ihn bestimmt ausgezeichnet sind. Dazu verwaltet der Koordinator 28 eine Datenbasis 42 mit Adressinformationen der Haushaltsgeräte 12 der zweiten Gruppe 26. Die Datenbasis 42 ist dabei üblicherweise in Form einer Tabelle in einem nicht dargestellten Speicher des Koordinators 28 implementiert. Anhand des Inhalts dieser Datenbasis 42 kann der Koordinator 28 auch Telegramme 30 empfangen, die entsprechend der von dem Telegramm 30 umfassten Adressinformationen 38, 40 nicht als originär für den Koordinator 28 bestimmt ausgezeichnet sind. Konkret kann der Koordinator 28 jetzt Telegramme 30 empfangen, die im ersten Datagramm 34 mit der dortigen Adressinformation 38 als für den jeweiligen Adressaten 32 der zweiten Gruppe 26 bestimmt bezeichnet sind. Nach einem derartigen Empfang eines solchen Telegramms 30 kann der Koordinator 28 das zweite Datagramm 36 aus dem Telegramm 30 extrahieren und das zweite Datagramm 36 entsprechend dem zweiten Kommunikationsprotokoll an den jeweiligen Adressaten 32 weiterleiten. Dafür bezeichnet das zweite Datagramm 36 mit der davon umfassten weiteren Adressinformation 40 direkt den Adressaten 32 der zweiten Gruppe 26.

Die Datenbasis 42 mit Adressinformationen der Haushaltsgeräte 12 der zweiten Gruppe 26 kann der Koordinator 28 automatisch und selbsttätig erstellen, indem zum Beispiel die Art und Anzahl der für den Koordinator 28 innerhalb der zweiten Gruppe 26 von Haushaltsgeräten 12 erreichbaren Haushaltsgeräte 12 ermittelt wird und diese charakteristische Daten zurückliefern, nämlich zumindest eine das jeweilige Haushaltsgerät 12 bezeichnende Adressinformation, und der Koordinator 28 diese Daten in die Datenbasis 42 übernimmt. Der Koordinator 28 kann die Datenbasis 42 auch selbsttätig aktualisieren, indem zu vorgegebenen oder vorgebbaren Zeitpunkten, insbesondere zyklisch und äquidistant, die Art und die Anzahl der gemäß dem zweiten Kommunikationsprotokoll erreichbaren Haushaltsgeräte 12 überprüft wird.

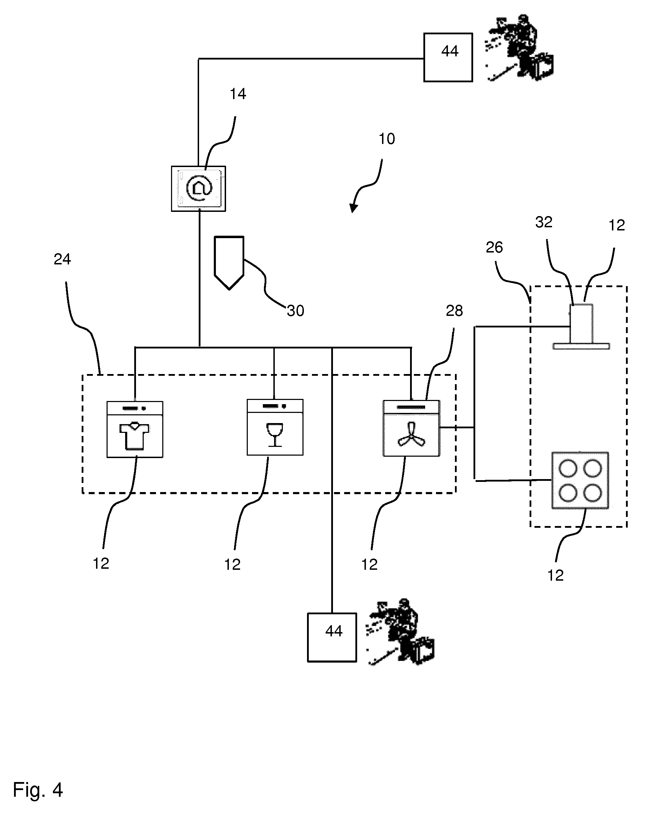

Zur Verdeutlichung der Vorteile des hier beschriebenen Ansatzes wiederholt Figur 4 im Wesentlichen nochmals die Darstellung aus Figur 2. Zusätzlich ist schematisch vereinfacht ein Servicetechniker gezeigt, der ein Servicegerät 44, zum Beispiel einen als Servicegerät 44 fungierenden Personalcomputer oder dergleichen, zum Zugriff auf einzelne oder mehrere Haushaltsgeräte 12 verwendet. Der am Aufstellungsort der Haushaltsgeräte 12 anwesende Servicetechniker kann mit seinem Servicegerät 44 auf alle in dem Haushaltsgerätenetzwerk 10 zusammengefassten Haushaltsgeräte 12 zugreifen, sobald das Servicegerät 44 an das Haushaltsgerätenetzwerk 10 angeschlossen ist. Dabei kommt es auf den Anschlussort nicht an und das Servicegerät 44 kann genauso an eines der nicht als Koordinator 28 fungierenden Haushaltsgeräte 12 wie an das zumindest eine als Koordinator 28 fungierende Haushaltsgerät 12 angeschlossen sein. Bei einem solchen Anschluss an eines der Haushaltsgeräte 12 der ersten Gruppe 24 besteht über den Koordinator 28 jederzeit auch eine Zugriffsmöglichkeit auf jedes Haushaltsgerät 12 der zweiten Gruppe 26. Wenn der Servicetechniker mit seinem Servicegerät 44 nicht am Aufstellungsort der Haushaltsgeräte 12 anwesend ist oder anwesend sein kann, besteht eine Möglichkeit zur Fernwartung und dergleichen, indem sich der Servicetechniker mit seinem Servicegerät 44 über das Internet 16 (Figur 1) mit dem von dem jeweiligen Haushaltsgerätenetzwerk 10 umfassten und als Gateway fungierenden speziellen Netzwerkknoten 14 verbindet und von dort Zugriff auf das Haushaltsgerätenetzwerk 10 insgesamt erhält, und zwar auf jedes Haushaltsgerät 12 der ersten Gruppe 24 und vermittels des Koordinators 28 auch auf jedes Haushaltsgerät 12 der zweiten Gruppe 26.

Wenngleich der Servicetechniker mit seinem speziellen Servicegerät 44 spezielle Einflussmöglichkeiten auf einzelne von dem Haushaltsgerätenetzwerk 10 umfasste Haushaltsgeräte 12 hat und zum Beispiel eine neue Parametrierung eines Haushaltsgeräts 12 oder dergleichen vornehmen kann, steht die Verwendung des oben beschriebenen Kommunikationspfads unter Verwendung des Internets 16 auch dem Betreiber der in dem Haushaltsgerätenetzwerk 10 zusammengefassten Haushaltsgeräte 12 zur Verfügung, so dass zum Beispiel auch von einem entfernten Ort der Status der einzelnen Haushaltsgeräte 12, und zwar jedes Haushaltsgeräts 12 der ersten Gruppe 24 und über Vermittlung des Koordinators 28 auch jedes Haushaltsgeräts 12 der zweiten Gruppe 26, abgefragt werden kann.

Alle hier beschriebenen Zugriffsmöglichkeiten sind lediglich als Beispiele zu verstehen und für den jeweiligen Fachmann ist selbstverständlich, dass die jeweilige Art des Zugriffs durch die mit dem jeweiligen Telegramm 30 übertragenen Nutzdaten festgelegt sind, wobei die Art der Nutzdaten durch das hier beschriebene Verfahren, insbesondere die Datenweiterleitung an ein der zweiten Gruppe 26 zugehöriges Haushaltsgerät 12, in keinster Weise begrenzt ist.

Des Weiteren ist auch - obwohl bisher die Weiterleitung von Daten vom Koordinator 28 zum Adressaten 32 im Vordergrund gestanden hat - genauso der umgekehrte Weg denkbar, dass nämlich das hier als Adressat 32 bezeichnete Haushaltsgerät 12 Daten zur weiteren Bearbeitung außerhalb der ersten Gruppe 24 sendet, zum Beispiel auf eine mit einem Servicegerät 44 abgesetzte Anfrage. Auch in einem solchen Szenario übernimmt der Koordinator 28 die Umsetzung der Nutzdaten und wandelt das vom Adressaten 32 erhaltene Telegramm gemäß dem zweiten Kommunikationsprotokoll in ein Telegramm gemäß dem ersten Kommunikationsprotokoll um, so dass eine Weiterleitung eines solchen Telegramms außerhalb der zweiten Gruppe 26 möglich ist.

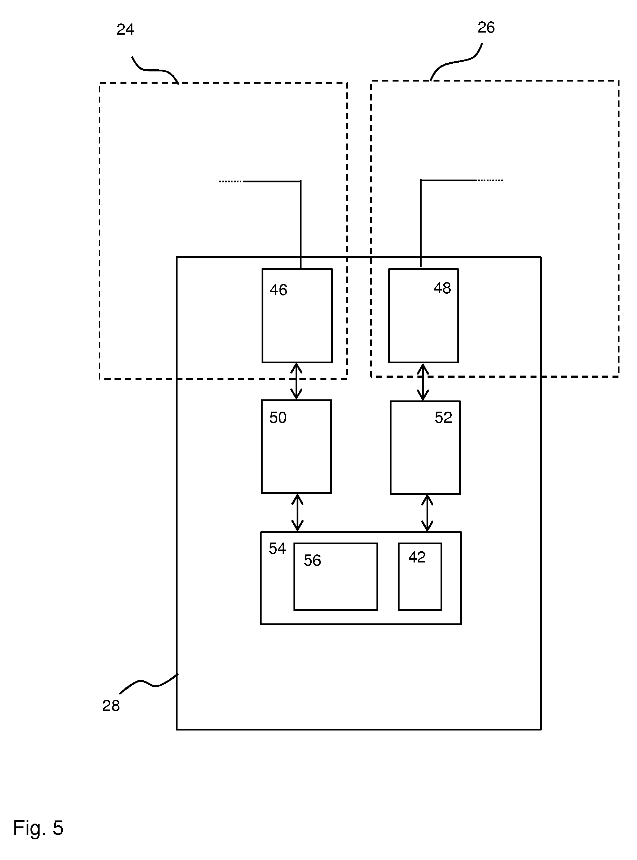

Figur 5 zeigt abschließend eine vergrößerte Darstellung des als Koordinator 28 fungierenden Haushaltsgeräts 12. Danach umfasst der Koordinator 28 eine erste Hardwareschnittstelle 46 zur kommunikativen Verbindung mit anderen Haushaltsgeräten 12 entsprechend dem ersten Kommunikationsprotokoll, also zur innerhalb der ersten Gruppe 24 von Haushaltsgeräten 12 bestehenden Vernetzung, und eine zweite Hardwareschnittstelle 48 zur kommunikativen Verbindung mit anderen Haushaltsgeräten 12 gemäß dem zweiten Kommunikationsprotokoll, also zur kommunikativen Verbindung mit den in der zweiten Gruppe 26 zusammengefassten Haushaltsgeräten 12. Zur Bedienung der ersten und zweiten Hardwareschnittstelle 46, 48 sind in einem Speicher (nicht separat dargestellt) des Koordinators 28 eine erste Softwareschnittstelle 50 und eine zweite Softwareschnittstelle 52 implementiert. Über die Hard- und Softwareschnittstellen 46, 48; 50, 52 erfolgt innerhalb des Koordinators 28 die grundsätzlich an sich bekannte Verarbeitung und Erzeugung von Telegrammen 30, also zum Beispiel das Empfangen eines über die erste Hardwareschnittstelle 46 und die erste Softwareschnittstelle 50 eingehenden und für einen Adressaten 32 bestimmten Telegramms 30 und nach Extraktion des zweiten Datagramms 36 aus einem solchen Telegramm 30 die Erzeugung und Weiterleitung eines für den Adressaten 32 bestimmten Telegramms mittels der zweiten Softwareschnittstelle 52 und der zweiten Hardwareschnittstelle 48. Für den umgekehrten Weg, also für ein von einem Haushaltsgerät 12 der zweiten Gruppe 26 abgesetztes Telegramm 30, gilt dies entsprechend in umgekehrter Reihenfolge.

Die Hard- und Softwareschnittstellen 46, 48; 50, 52 können in einem Kommunikationsmodul oder dergleichen zusammengefasst sein. Unabhängig von der Realisierung der Hard- und Softwareschnittstellen 46, 48; 50, 52 erfolgt der Betrieb der Hard- und Softwareschnittstellen 46, 48; 50, 52 unter Kontrolle einer Steuerungseinheit 54, bei der es sich um die Steuerungseinheit des jeweiligen Haushaltsgeräts 12 handeln kann und die dementsprechend neben der Kommunikation in dem Haushaltsgerätenetzwerk 10 noch andere Funktionen ausführen kann. Unabhängig davon, ob das jeweilige Haushaltsgerät 12 genau eine Steuerungseinheit 54 oder mehrere Steuerungseinheiten 54, von denen eine zur Ausführung von Kommunikationsaufgaben bestimmt ist, aufweist, erfolgt die Ausführung des hier beschriebenen Verfahrens und aller Ausführungsformen durch eine Steuerungseinheit 54, deren Funktionalität im Wesentlichen durch Software oder durch Soft- und Hardware oder Soft- und Firmware bestimmt ist, so dass ein von der Steuerungseinheit 54 ausgeführtes Steuerungsprogramm 56 das Verfahren und eventuell einzelne Ausgestaltungen implementiert. Die Steuerungseinheit 54 umfasst auch oder hat zumindest Zugriff auf die Datenbasis 42 (Figur 3). Nicht dargestellt ist, dass die Steuerungseinheit 54 zur Ausführung des Steuerungsprogramms 56 in an sich bekannter Art und Weise eine Verarbeitungseinheit in Form von oder nach Art eines Mikroprozessors oder dergleichen umfasst.

### Bezugsziffern

- 10: Haushaltsgerätenetzwerk
- 12: Haushaltsgerät
- 14: Netzwerkknoten
- 16: Internet
- 18: Personalcomputer (lokal)
- 20: Personalcomputer (entfernt)
- 22: Smartphone
- 24: erste Gruppe von Haushaltsgeräten
- 26: zweite Gruppe von Haushaltsgeräten
- 28: Koordinator
- 30: Telegramm
- 32: Adressat
- 34: erstes, äußeres Datagramm
- 36: zweites, inneres Datagramm
- 38: Adressinformation
- 40: weitere Adressinformation
- 42: Datenbasis (Tabelle)
- 44: Servicegerät
- 46: erste Hardwareschnittstelle
- 48: zweite Hardwareschnittstelle
- 50: erste Softwareschnittstelle
- 52: zweite Softwareschnittstelle
- 54: Steuerungseinheit
- 56: Steuerungsprogramm

## Patentansprüche

1. Verfahren zum Betrieb einer Mehrzahl von in einem Haushaltsgerätenetzwerk (10) zusammengefassten und untereinander kommunikativ verbundenen Haushaltsgeräten (12), wobei innerhalb der kommunikativ verbundenen Haushaltsgeräte (12) eine erste Gruppe (24) der Haushaltsgeräte (12) zur Verwendung eines ersten Kommunikationsprotokolls und eine zweite Gruppe (26) der Haushaltsgeräte (12) zur Verwendung eines zweiten Kommunikationsprotokolls eingerichtet sind und wobei mindestens ein als Koordinator (28) fungierendes Haushaltsgerät (12) der ersten Gruppe (24) auch zur Verwendung des zweiten Kommunikationsprotokolls eingerichtet ist, wobei der oder jeder Koordinator (28) als Empfänger eines von außerhalb des Haushaltsgerätenetzwerks (10) eingehenden Telegramms (30) für ein Haushaltsgerät (12) der zweiten Gruppe (26) - Adressat (32) - fungiert und der Koordinator (28) nach Empfang eines solchen Telegramms (30) Nutzdaten des Telegramms (30) entsprechend dem zweiten Kommunikationsprotokoll an den jeweiligen Adressaten (32) der zweiten Gruppe (26) weiterleitet,
wobei das für den Adressaten (32) bestimmte Telegramm (30) einerseits ein gemäß dem ersten Kommunikationsprotokoll interpretierbares erstes, äußeres Datagramm (34) und andererseits ein gemäß dem zweiten Kommunikationsprotokoll interpretierbares zweites, inneres Datagramm (36) umfasst und wobei der Koordinator (28) beim Erhalt eines für einen Adressaten (32) innerhalb der zweiten Gruppe der Haushaltsgeräte (12) bestimmten Telegramms (30) das zweite Datagramm (36) aus dem Telegramm (30) extrahiert und das zweite Datagramm (36) entsprechend dem zweiten Kommunikationsprotokoll an den jeweiligen Adressaten (32) der zweiten Gruppe (26) weiterleitet,
wobei das von außerhalb des Haushaltsgerätenetzwerks (10) eingehende Telegramm (30) im ersten und im zweiten Datagramm (34, 36) den jeweiligen Adressaten (32) der zweiten Gruppe (26) bezeichnet, wobei der Koordinator (28) eine Datenbasis (42) mit Adressinformationen der Haushaltsgeräte (12) der zweiten Gruppe (26) umfasst und wobei der Koordinator (28) anhand der Datenbasis (42) auch Telegramme (30) empfängt, die im ersten Datagramm (34) als für einen jeweiligen Adressaten (32) der zweiten Gruppe (26) bestimmt bezeichnet sind,
wobei der Koordinator (28) ein für einen Adressaten (32) der zweiten Gruppe (26) empfangenes Telegramm (30) anhand einer vom zweiten Datagramm (36) umfassten Adressinformation (40) an den Adressaten (32) der zweiten Gruppe (26) weiterleitet.

2. Verfahren nach Anspruch 1, wobei der Koordinator (28) die Datenbasis (42) mit Adressinformationen der Haushaltsgeräte (12) der zweiten Gruppe (26) automatisch und selbsttätig erstellt.

3. Verfahren nach Anspruch 1 oder 2, wobei der Koordinator (28) ein empfangenes, für einen Adressaten (32) der zweiten Gruppe (26) bestimmtes Telegramm (30) anhand einer vom ersten Datagramm (34) umfassten Adressinformation (38) an den Adressaten (32) der zweiten Gruppe (26) weiterleitet, indem das zweite Datagramm (36) um die vom ersten Datagramm (34) umfasste Adressinformation (38) ergänzt wird.

4. Verfahren nach einem der vorangehenden Ansprüche, wobei das zweite Kommunikationsprotokoll eine im Vergleich zum ersten Kommunikationsprotokoll geringere Anzahl von Protokollschichten implementiert.

5. Verfahren nach einem der vorangehenden Ansprüche, wobei ein im Haushaltsgerätenetzwerk (10) als zentraler Kommunikationsteilnehmer (28) fungierendes Haushaltsgerät (12) der ersten Gruppe (24) Informationen zu allen von dem Haushaltsgerätenetzwerk (10) umfassten Haushaltsgeräten (12) der ersten und der zweiten Gruppe (24, 26) sammelt und anderen Haushaltsgeräten (12) des Haushaltsgerätenetzwerks (10) und/oder Geräten außerhalb des Haushaltsgerätenetzwerks (10) zur Verfügung stellt.

6. Haushaltsgerät (28), umfassend:
eine erste Hardwareschnittstelle (46) zur kommunikativen Verbindung mit anderen Haushaltsgeräten (12) entsprechend einem ersten Kommunikationsprotokoll, wobei eine erste Gruppe (24) der Haushaltsgeräte (12) zur Verwendung des ersten Kommunikationsprotokolls eingerichtet ist,
eine zweite Hardwareschnittstelle (48) zur kommunikativen Verbindung mit anderen Haushaltsgeräten (12) gemäß einem zweiten Kommunikationsprotokoll, wobei eine zweite Gruppe (26) der Haushaltsgeräte (12) zur Verwendung des zweiten Kommunikationsprotokolls eingerichtet,
einen Speicher, in dem eine erste Softwareschnittstelle (50) zur Bedienung der ersten Hardwareschnittstelle (46) und eine zweite Softwareschnittstelle (52) zur Bedienung der zweiten Hardwareschnittstelle (48) implementiert sind,
mindestens eine Steuerungseinheit (54) zur Ausführung eines Steuerungsprogramms (56), wobei die Steuerungseinheit (54) eine Datenbasis (42) umfasst oder Zugriff darauf hat,
wobei das Haushaltsgerät (28) eingerichtet ist, die folgenden Schritte auszuführen:
Empfangen eines von außerhalb des von den Haushaltsgeräten (12) gebildeten Haushaltsgerätenetzwerks (10) eingehenden Telegramms (30) für ein Haushaltsgerät (12) der zweiten Gruppe (26), das den Adressat (32) darstellt, und nach Empfang eines solchen Telegramms (30) Weiterleiten der Nutzdaten des Telegramms (30) entsprechend dem zweiten Kommunikationsprotokoll an den Adressaten (32) der zweiten Gruppe (26),
wobei das für den Adressaten (32) bestimmte Telegramm (30) einerseits ein gemäß dem ersten Kommunikationsprotokoll interpretierbares erstes, äußeres Datagramm (34) und andererseits ein gemäß dem zweiten Kommunikationsprotokoll interpretierbares zweites, inneres Datagramm (36) umfasst,
Extrahieren des zweiten Datagramms (36) aus dem Telegramm (30) beim Erhalt eines für einen Adressaten (32) innerhalb der zweiten Gruppe (26) der Haushaltsgeräte (12) bestimmten Telegramms (30) und Weiterleiten des zweiten Datagramms (36) entsprechend dem zweiten Kommunikationsprotokoll an den Adressaten (32) der zweiten Gruppe (26),
wobei das von außerhalb des Haushaltsgerätenetzwerks (10) eingehende Telegramm (30) im ersten und im zweiten Datagramm (34, 36) den jeweiligen Adressaten (32) der zweiten Gruppe (26) bezeichnet,
wobei der Koordinator (28) ein für einen Adressaten (32) der zweiten Gruppe (26) empfangenes Telegramm (30) anhand einer vom zweiten Datagramm (36) umfassten Adressinformation (40) an den Adressaten (32) der zweiten Gruppe (26) weiterleitet.

7. Haushaltsgerät (28) nach Anspruch 6, wobei die erste Hardwareschnittstelle (46) leitungsgebunden ist und die zweite Hardwareschnittstelle (48) leitungslos ist.

## Claims

1. Method for operating a plurality of domestic appliances (12) which are combined in a domestic appliance network (10) and communicatively connected to one another, wherein, within the communicatively connected domestic appliances (12), a first group (24) of the domestic appliances (12) is set up to use a first communication protocol and a second group (26) of the domestic appliances (12) is set up to use a second communication protocol, and wherein at least one domestic appliance (12) from the first group (24) which functions as a coordinator (28) is also set up to use the second communication protocol, wherein the or each coordinator (28) functions as a receiver of a telegram (30) which is received from outside the domestic appliance network (10) and is intended for a domestic appliance (12) in the second group (26), i.e. the addressee (32), and the coordinator (28) forwards a payload from the telegram (30) to the relevant addressee (32) in the second group (26) in accordance with the second communication protocol once a telegram (30) of this type has been received,
wherein the telegram (30) intended for the addressee (32) contains a first external datagram (34) that can be interpreted in accordance with the first communication protocol, and a second internal datagram (36) which can be interpreted in accordance with the second communication protocol, and wherein the coordinator (28) extracts the second datagram (36) from the telegram (30) when a telegram (30) which is intended for an addressee (32) within the second group (26) of domestic appliances (12) is received, and forwards the second datagram (36) to the relevant addressee (32) in the second group (26) in accordance with the second communication protocol,
wherein the telegram (30) received from outside the domestic appliance network (10) indicates, in the first and in the second datagram (34, 36), the relevant addressee (32) in the second group (26), wherein the coordinator (28) comprises a database (42) containing address information for the domestic appliances (12) in the second group (26), and wherein the coordinator (28) also receives telegrams (30) by means of the database (42) which are denoted in the first datagram (34) as being intended for a particular addressee (32) in the second group (26),
wherein the coordinator (28) forwards a telegram (30) received for an addressee (32) in the second group (26) to the addressee (32) in the second group (26) on the basis of address information (40) contained in the second datagram (36).

2. Method according to claim 1, wherein the coordinator (28) automatically and autonomously creates the database (42) of address information for the domestic appliances (12) in the second group (26).

3. Method according to either claim 1 or claim 2, wherein the coordinator (28) forwards a received telegram (30) that is intended for an addressee (32) in the second group (26) to the addressee (32) in the second group (26) on the basis of address information (38) contained in the first datagram (34), the second datagram (36) being supplemented by the address information (38) contained in the first datagram (34).

4. Method according to any of the preceding claims, wherein the second communication protocol implements a smaller number of protocol layers than the first communication protocol.

5. Method according to any of the preceding claims, wherein a domestic appliance (12) from the first group (24) which functions as a central communication participant (28) in the domestic appliance network (10) collects information relating to all of the domestic appliances (12) from the first and the second group (24, 26) contained in the domestic appliance network (10) and provides said information to other domestic appliances (12) in the domestic appliance network (10) and/or appliances outside the domestic appliance network (10).

6. Domestic appliance (28), comprising:
a first hardware interface (46) for communicative connection to other domestic appliances (12) in accordance with a first communication protocol, wherein a first group (24) of the domestic appliances (12) is set up to use the first communication protocol,
a second hardware interface (48) for communicative connection to other domestic appliances (12) in accordance with a second communication protocol, wherein a second group (26) of the domestic appliances (12) is set up to use the second communication protocol,
a memory in which a first software interface (50) for operating the first hardware interface (46), and a second software interface (52) for operating the second hardware interface (48), are implemented,
and at least one control unit (54) for executing a control program (56), wherein the control unit (54) comprises or has access to a database (42),
wherein the domestic appliance (28) is designed to carry out the following steps:
receiving a telegram (30) from outside the domestic appliance network (10) formed by the domestic appliances (12) that is intended for a domestic appliance (12) in the second group (26) and represents the addressee (32), and forwarding the payload from the telegram (30) to the addressee (32) in the second group (26) in accordance with the second communication protocol once a telegram (30) of this type has been received,
wherein the telegram (30) intended for the addressee (32) contains a first external datagram (34) that can be interpreted in accordance with the first communication protocol, and a second internal datagram (36) which can be interpreted in accordance with the second communication protocol,
extracting the second datagram (36) from the telegram (30) when a telegram (30) which is intended for an addressee (32) within the second group (26) of domestic appliances (12) is received, and forwarding the second datagram (36) to the addressee (32) in the second group (26) in accordance with the second communication protocol,
wherein the telegram (30) received from outside the domestic appliance network (10) indicates, in the first and in the second datagram (34, 36), the relevant addressee (32) in the second group (26),
wherein the coordinator (28) forwards a telegram (30) received for an addressee (32) in the second group (26) to the addressee (32) in the second group (26) on the basis of address information (40) contained in the second datagram (36).

7. Domestic appliance (28) according to claim 6, wherein the first hardware interface (46) is wired and the second hardware interface (48) is wireless.

## Revendications

1. Procédé de fonctionnement d'une pluralité d'appareils électroménagers (12) rassemblés dans un réseau d'appareils électroménagers (10) et raccordés les uns autres de manière communicative, dans lequel, à l'intérieur des appareils électroménagers (12) raccordés de manière communicative, un premier groupe (24) d'appareils électroménagers (12) est configuré pour l'utilisation d'un premier protocole de communication et un deuxième groupe (26) d'appareils électroménagers (12) est configuré pour l'utilisation d'un deuxième protocole de communication, et dans lequel au moins un appareil électroménager (12) du premier groupe (24) fonctionnant en tant que coordinateur (28) est également configuré pour l'utilisation du deuxième protocole de communication, dans lequel le ou chaque coordinateur (28) fonctionne en tant que récepteur d'un télégramme (30), entrant en provenance de l'extérieur du réseau d'appareils électroménagers (10), pour un appareil électroménager (12) du deuxième groupe (26) - destinataire (32) - et le coordinateur (28), après réception d'un tel télégramme (30), transmet au destinataire (32) respectif du deuxième groupe (26) des données utiles du télégramme (30) conformément au deuxième protocole de communication,
dans lequel le télégramme (30) destiné au destinataire (32) comprend, d'une part, un premier datagramme (34) extérieur interprétable selon le premier protocole de communication et, d'autre part, un deuxième datagramme (36) intérieur interprétable selon le deuxième protocole de communication, et dans lequel, lors de l'obtention d'un télégramme (30) destiné à un destinataire (32) à l'intérieur du deuxième groupe d'appareils électroménagers (12), le coordinateur (28) extrait le deuxième datagramme (36) à partir du télégramme (30) et transmet le deuxième datagramme (36) conformément au deuxième protocole de communication au destinataire (32) respectif du deuxième groupe (26),
dans lequel le télégramme (30) entrant en provenance de l'extérieur du réseau d'appareils électroménagers (10) désigne dans le premier et dans le deuxième datagramme (34, 36) le destinataire (32) respectif du deuxième groupe (26), dans lequel le coordinateur (28) comprend une base de données (42) avec des informations d'adresse des appareils électroménagers (12) du deuxième groupe (26), et dans lequel le coordinateur (28), à l'aide de la base de données (42), reçoit également des télégrammes (30) qui sont désignés dans le premier datagramme (34) comme étant destinés à un destinataire (32) respectif du deuxième groupe (26),
dans lequel le coordinateur (28) transmet au destinataire (32) du deuxième groupe (26) un télégramme (30) reçu pour un destinataire (32) du deuxième groupe (26) à l'aide d'une information d'adresse (40) contenue dans le deuxième datagramme (36).

2. Procédé selon la revendication 1, dans lequel le coordinateur (28) établit automatiquement et de façon autonome la base de données (42) avec des informations d'adresse des appareils électroménagers (12) du deuxième groupe (26).

3. Procédé selon la revendication 1 ou 2, dans lequel le coordinateur (28) transmet au destinataire (32) du deuxième groupe (26) un télégramme (30) reçu pour un destinataire (32) du deuxième groupe (26) à l'aide d'une information d'adresse (38) contenue dans le premier datagramme (34) par le fait que le deuxième datagramme (36) est complété par l'information d'adresse (38) contenue dans le premier datagramme (34).

4. Procédé selon l'une des revendications précédentes, dans lequel le deuxième protocole de communication met en oeuvre un nombre de couches de protocole plus faible comparé au premier protocole de communication.

5. Procédé selon l'une des revendications précédentes, dans lequel un appareil électroménager (12) du premier groupe (24) fonctionnant dans le réseau d'appareils électroménagers (10) en tant que participant central à la communication (28) collecte des informations sur tous les appareils électroménagers (12) du premier et du deuxième groupe (24, 26) contenus dans le réseau d'appareils électroménagers (10) et les met à la disposition d'autres appareils électroménagers (12) du réseau d'appareils électroménagers (10) et/ou d'appareils à l'extérieur du réseau d'appareils électroménagers (10).

6. Appareil électroménager (28), comprenant :
une première interface matérielle (46) pour la liaison communicative avec d'autres appareils électroménagers (12) conformément à un premier protocole de communication, dans lequel un premier groupe (24) d'appareils électroménagers (12) est configuré pour l'utilisation du premier protocole de communication,
une deuxième interface matérielle (48) pour la liaison communicative avec d'autres appareils électroménagers (12) conformément à un deuxième protocole de communication, dans lequel un deuxième groupe (26) d'appareils électroménagers (12) est configuré pour l'utilisation du deuxième protocole de communication,
une mémoire dans laquelle sont mises en oeuvre une première interface logicielle (50) pour la commande de la première interface matérielle (46) et une deuxième interface logicielle (52) pour la commande de la deuxième interface matérielle (48),
au moins une unité de contrôle (54) pour l'exécution d'un programme de contrôle (56), dans laquelle l'unité de contrôle (54) comprend une base de données (42) ou a accès à celle-ci,
dans lequel l'appareil électroménager (28) est configuré pour exécuter les étapes suivantes :
réception d'un télégramme (30), entrant en provenance de l'extérieur du réseau d'appareils électroménagers (10) formé par les appareils électroménagers (12), pour un appareil électroménager (12) du deuxième groupe (26), qui représente le destinataire (32) et, après réception d'un tel télégramme (30), transmission au destinataire (32) du deuxième groupe (26) des données utiles du télégramme (30) conformément au deuxième protocole de communication,
dans lequel le télégramme (30) destiné au destinataire (32) comprend, d'une part un premier datagramme (34) extérieur interprétable selon le premier protocole de communication et, d'autre part, un deuxième datagramme (36) intérieur interprétable selon le deuxième protocole de communication,
extraction du deuxième datagramme (36) à partir du télégramme (30) lors de l'obtention d'un télégramme (30) destiné à un destinataire (32) à l'intérieur du deuxième groupe (26) d'appareils électroménagers (12) et transmission au destinataire (32) du deuxième groupe (26) du deuxième datagramme (36) conformément au deuxième protocole de communication,
dans lequel le télégramme (30) entrant en provenance de l'extérieur du réseau d'appareils électroménagers (10) désigne dans le premier et dans le deuxième datagramme (34, 36) le destinataire (32) respectif du deuxième groupe (26),
dans lequel le coordinateur (28) transmet au destinataire (32) du deuxième groupe (26) un télégramme (30) reçu pour un destinataire (32) du deuxième groupe (26) à l'aide d'une information d'adresse (40) contenue dans le deuxième datagramme (36).

7. Appareil électroménager (28) selon la revendication 6, dans lequel la première interface matérielle (46) est à liaison filaire et la deuxième interface matérielle (48) est sans fil.
